# EUROPÄISCHE PATENTANMELDUNG

(11) **EP 1 162 773 A2**
(43) Veröffentlichungstag der Anmeldung: **12.12.2001**
(21) Anmeldenummer: 01440149.1
(22) Anmeldetag: 31.05.2001
(51) Int. Cl.: H04J 14/02

(54) **Mehrstufiger optischer Demultiplexer und mehrstufiger optischer Multiplexer**

(30) Priorität: 05.06.2000 DE 10027318
(71) Anmelder: ALCATEL, 75008 Paris (FR)
(72) Erfinder: Wedding, Berthold, Dr., 70825 Korntal-Münchingen (DE)
(74) Vertreter: Wörz, Volker Alfred

(57) **Zusammenfassung**

Die Erfindung betrifft einen optischen Demultiplexer (1) mit mindestens einem Eingang (4) und mehreren Ausgängen (5), zum Verteilen einer optischen Eingangsinformation auf die Ausgänge (5). Die Erfindung betrifft außerdem einen optischen Multiplexer (11) mit mehreren Eingängen (14) und mindestens einem Ausgang (15), zum Verknüpfen von optischen Eingangsinformationen zu einer Ausgangsinformation. Der Demultiplexer (1) und der Multiplexer (11) sind mehrstufig ausgebildet. Die einzelnen Stufen sind mittels optischer Wellenleiter miteinander verbunden. Um die Verluste innerhalb des Demultiplexers (1)/Multiplexers (11) möglichst gering zu halten wird vorgeschlagen, zwischen den einzelnen Stufen des Demultiplexers (1)/Multiplexers (11) optische Verstärker (6; 16) anzuordnen, die mit einem Metall der Seltenen Erden dotierte aktive Glasfasern (7; 17) oder aktive planare Wellenleiter und mindestens eine Energiequelle (8; 18) aufweisen, wobei eine Energiequelle (8; 18) für mehrere optische Verstärker (6; 16) vorgesehen ist.

## Beschreibung

Die vorliegende Erfindung betrifft einen optischen Demultiplexer mit mindestens einem Eingang und mehreren Ausgängen. Der Demultiplexer dient zum Verteilen einer optischen Eingangsinformation auf mehrere Ausgangsinformationen. Der Demultiplexer ist mehrstufig ausgebildet, wobei die einzelnen Stufen mittels optischer Wellenleiter miteinander verbunden sind. Die vorliegende Erfindung betrifft außerdem einen optischen Multiplexer mit mehreren Eingängen und mindestens einem Ausgang. Der Multiplexer dient zum Verknüpfen von optischen Eingangsinformationen zu einer Ausgangsinformation. Der Multiplexer ist mehrstufig ausgebildet, wobei die einzelnen Stufen mittels optischer Wellenleiter miteinander verbunden sind.

Aus dem Stand der Technik sind zweistufige optische Demultiplexer bekannt. Die Demultiplexer weisen in einer ersten Stufe einen ersten Splitter mit mindestens einem Eingang und mehreren Ausgängen auf. Der Splitter ist nicht wellenlängenselektiv ausgebildet. Es ist aber auch möglich, einen wellenlängenselektiven Splitter einzusetzen. Ein Splitter verteilt eine optische Eingangsinformation auf mehrere Ausgänge. Ein nicht wellenlängenselektiver Splitter teilt ein Eingangssignal auf mehrere Ausgangssignale auf, die alle dieselbe Wellenlänge aufweisen. Bei einem wellenlängenselektiven Splitter weisen die Ausgangssignale unterschiedliche Wellenlängen auf. Als ein wellenlängenselektiver Splitter kann bspw. ein Prisma eingesetzt werden, auf dessen einer Seite ein Eingangssignal eintritt und auf dessen anderen Seite mehrere Ausgangssignale mit unterschiedlichen Wellenlängen austreten. Ein Splitter kann auch als ein Glasfaserschmelzkoppler oder mit planaren Wellenleitern ausgebildet sein, die sich von einem oder mehreren Eingängen aus im Inneren des Kopplers auf mehrere Ausgänge verzweigen. Ein Splitter kann des Weiteren als ein sog. Arrayed Waveguide Grating (AWG) ausgebildet sein.

In der zweiten Stufe des Demultiplexers ist für jeden Ausgang des ersten Splitters der ersten Stufe ein weiterer Splitter mit mindestens einem Eingang und mehreren Ausgängen angeordnet. Die weiteren Splitter sind als wellenlängenselektive Splitter ausgebildet. Wenn der erste Splitter der ersten Stufe des Demultiplexers als ein 5:1-Splitter und die weiteren Splitter der zweiten Stufe als 8:1-Splitter ausgebildet sind, kann eine optische Eingangsinformation auf 40 Ausgangsinformationen verteilt werden.

Aus dem Stand der Technik sind des Weiteren zweistufig aufgebaute optische Multiplexer zum Verknüpfen von optischen Eingangsinformationen zu einer Ausgangsinformation bekannt. Die Multiplexer weisen in einer ersten Stufe mehrere erste Combiner auf mit jeweils mehreren Eingängen und mindestens einem Ausgang. Die Combiner der ersten Stufe sind als wellenlängenselektive Combiner ausgebildet. In der zweiten Stufe weisen die bekannten Multiplexer einen weiteren Combiner mit mehreren Eingängen und mindestens einem Ausgang auf. Die Ausgänge der ersten Combiner sind an die Eingänge des weiteren Combiners geführt. Wenn die ersten Combiner als 8:1-Combiner und der weitere Combiner als ein 5:1-Combiner ausgebildet ist, können mit dem bekannten Multiplexer die optischen Eingangsinformationen von 40 Eingängen zu einer einzigen Ausgangsinformation verknüpft werden.

Die bekannten optischen Demultiplexer und Multiplexer können in sog. Optical Add/Drop Multiplexern (OADM) eingesetzt werden. Derartige OADMs werden bspw. von der Fa. Alcatel, Paris, FR, unter der Bezeichnung Optinex 1640 OADM oder von der Fa. Ciena, Linthicum, US, unter der Bezeichnung MultiWave Sentry hergestellt und vertrieben.

Die bekannten Demultiplexer und Multiplexer haben den Nachteil, dass sie relativ hohe Verluste im Bereich von etwa 17 dB aufweisen, was einer Dämpfung um den Faktor 50 entspricht. Bauartbedingt führt ein Verteilen eines an einem Eingang anliegenden Eingangssignals auf bspw. fünf Ausgänge zu einer Dämpfung des Eingangssignals um den Faktor 5. Der Großteil der Dämpfung wird jedoch von den wellenlängenselektiven Splittern oder Combinern verursacht. Um eine zu starke Schwächung von optischen Signalen zu verhindern, ist es bei dem Optinex 1640 OADM von Alcatel bekannt, das Ausgangssignal eines Multiplexers und das Eingangssingal eines Demultiplexers zu verstärken. Mit dem Ausgangssignal eines Multiplexers bzw. dem Eingangssignal eines Demultiplexers werden jedoch nicht nur die Nutzanteile, sondern unerwünschterweise auch die Rauschanteile des Signals verstärkt.

Aus der EP 0 867 985 A1 ist ein Erbium-dotierter planarer Wellenleiter bekannt, der in Verbindung mit einer Energiequelle auch als optischer Verstärker eingesetzt werden kann. Ein derartiger optischer Verstärker erlaubt die unmittelbare Verstärkung von optischen Signalen, ohne den Umweg über ein elektrisches Signal gehen zu müssen. Das für den optischen Verstärker eingesetzte optische Wellenleitermaterial ist in der US 5,491,708 beschrieben. Es wird vorgeschlagen, den optischen Verstärker zum Verstärken eines optischen Signals nach einer bestimmten Übertragungsstrecke, typischerweise im Bereich von etwa 50 bis 100 km, einzusetzen. Der Einsatz des optischen Verstärkers in bestimmten optischen Bauelementen wird nicht vorgeschlagen.

Der vorliegenden Erfindung liegt die Aufgabe zu Grunde, einen optischen Demultiplexer bzw. einen optischen Multiplexer dahingehend auszugestalten und weiterzubilden, dass er eine möglichst geringe optische Dämpfung aufweist.

Zur Lösung dieser Aufgabe schlägt die Erfindung ausgehend von dem optischen Demultiplexer der eingangs genannten Art vor, dass zwischen den einzelnen Stufen des Demultiplexers optische Verstärker angeordnet sind, die mit einem Metall der Seltenen Erden dotierte aktive Glasfasern oder aktive planare Wellenleiter und mindestens eine Energiequelle aufweisen, wobei eine Energiequelle für mehrere optische Verstärker vorgesehen ist.

Ausgehend von dem optischen Multiplexer der eingangs genannten Art wird zur Lösung der Aufgabe der vorliegenden Erfindung vorgeschlagen, dass zwischen den einzelnen Stufen des Multiplexers optische Verstärker angeordnet sind, die mit einem Metall der Seltenen Erden dotierte aktive Glasfasern oder aktive planare Wellenleiter und mindestens eine Energiequelle aufweisen, wobei eine Energiequelle für mehrere optische Verstärker vorgesehen ist.

Erfindungsgemäß werden also die optischen Wellenleiter, durch die die einzelnen Stufen des Demultiplexers bzw. Multiplexers miteinander verbunden sind, als optische Verstärker ausgebildet, wie sie aus der EP 0 867 985 A1 an sich bekannt sind. Dazu werden die optischen Wellenleiter zwischen den einzelnen Stufen als aktive Glasfasern oder aktive planare Wellenleiter ausgebildet, wie sie an sich aus der US 5,491,708 bekannt sind. Auf diese beiden Druckschriften wird ausdrücklich Bezug genommen. Die aktiven Glasfasern und die aktiven planaren Wellenleiter bestehen aus einem optischen Wellenleitermaterial, das mit einem Metall der Seltenen Erden dotiert ist. Die mindestens eine Energiequelle liefert den optischen Verstärkern die zur Verstärkung der optischen Signale notwendige Energie.

Da nicht für jeden optischen Verstärker eine eigene Energiequelle vorgesehen ist, kann der erfindungsgemäße Demultiplexer/Multiplexer besonders kleinbauend ausgebildet werden. Außerdem können die Kosten der erfindungsgemäßen Demultiplexer/Multiplexer erheblich reduziert werden, da die Energiequellen relativ teuer sind. Eine Energiequelle je Demultiplexer/Multiplexer ist aus Kostengründen und aufgrund einer Platzersparnis besonders vorteilhaft. Mit mehreren - bspw. zwei - Energiequellen je Demultiplexer/Multiplexer kann die Zuverlässigkeit erhöht werden, da der Demultiplexer/ Mulitplexer auch dann noch weiter arbeitet, wenn eine der Energiequellen ausfällt. Zudem kann mit mehreren Energiequellen eine höhere Signalausgangsleistung erzielt werden.

Bei dem erfindungsgemäßen Demultiplexer/Multiplexer werden die auftretenden Verluste noch innerhalb des Demultiplexers/Multiplexers, also dort wo sie auftreten, kompensiert. Die Verluste einer Stufe des Demultiplexers/Multiplexers werden kompensiert noch bevor das verlustbehaftete optische Signal in die nächste Stufe des Demultiplexers/Multiplexers gelangt. Der Verstärkungsfaktor der optischen Verstärker kann so gewählt werden, dass die Dämpfung auf Grund der Splitter/Combiner in dem Demultiplexer/Multiplexer zum Teil, vollständig oder sogar überkompensiert wird, d.h. dass die Ausgangssignale eine größere Leistung als die Eingangssignale aufweisen.

Zum Dotieren des Materials der Glasfasern oder der Wellenleiter kommen Metalle der Seltenen Erden, bspw. Ytterbium (Yb) oder Praseodym (Pr), in Frage. Gemäß einer vorteilhaften Weiterbildung der vorliegenden Erfindung wird jedoch vorgeschlagen, dass das Material der Glasfasern oder der Wellenleiter mit Erbium dotiert ist.

Gemäß einer bevorzugten Ausführungsform der vorliegenden Erfindung wird vorgeschlagen, dass die oder jede Energiequelle als ein Pumplaser ausgebildet ist. Der Pumplaser liefert die für die Verstärkung der optischen Signale notwendige optische Energie. Die optischen Signale des Pumplaser werden mittels eines wellenlängenselektiven optischen Einkopplers in die dotierte Glasfaser bzw. den dotierten planaren Wellenleiter eingekoppelt. Die Wellenlänge des von dem Pumplaser ausgesandten Lichts ist kleiner als die Wellenlänge der durch den Demultiplexer/Multiplexer hindurch geführten optischen Signale.

Vorteilhafterweise ist eine Energiequelle für alle optischen Verstärker des Demultiplexers/Multiplexers vorgesehen. Auf diese Weise ergibt sich ein besonders einfacher und kleinbauender Aufbau des erfindungsgemäßen Demultiplexers/Multiplexers, der darüber hinaus besonders kostengünstig realisiert werden kann. Das Ausgangssignal eines optischen Verstärkers mit einer eigenen Energiequelle ist etwa um 20 bis 30 dB, d.h. etwa um einen Faktor 1000, gegenüber dem Eingangssignal verstärkt. Wenn lediglich eine Energiequelle für fünf optische Verstärker vorgesehen ist, ist das Ausgangssignal immer noch um den Faktor 200 gegenüber dem Eingangssignal verstärkt. Das reicht ohne weiteres aus, um die Dämpfung des Demultiplexers/Multiplexers, die etwa Faktor 50 beträgt, zu kompensieren.

Gemäß einer bevorzugten Ausführungsform der vorliegenden Erfindung wird vorgeschlagen, dass der Demultiplexer in einer ersten Stufe einen ersten Splitter mit mindestens einem Eingang und mehreren Ausgängen und in allen nachfolgenden Stufen für jeden Ausgang eines Splitters der übergeordneten Stufe einen weiteren Splitter mit mindestens einem Eingang und mehreren Ausgängen aufweist, wobei der oder jeder Pumplaser jeweils an einem freien Eingang eines Splitters angeschlossen ist.

Vorteilhafterweise weist der Demultiplexer in einer ersten Stufe einen ersten Splitter mit mindestens einem Eingang und mehreren Ausgängen und in allen nachfolgenden Stufen für jeden Ausgang eines Splitters der übergeordneten Stufe einen weiteren Splitter mit mindestens einem Eingang und mehreren Ausgängen auf, wobei der oder jeder Pumplaser jeweils an einem freien Eingang des Splitters der ersten Stufe angeschlossen ist. Die optische Energie des Pumplasers wird über den ersten Splitter auf sämtliche nachgeordneten optischen Verstärker des erfindungsgemäßen Demultiplexers aufgeteilt. Ein Splitter hat standardmäßig mehrere Eingänge, von denen beim Einsatz in einem Demultiplexer üblicherweise nur einer genutzt wird. An einen der übrigen freien Eingänge des Splitters wird der Pumplaser angeschlossen. An die übrigen freien Eingänge können weitere Pumplaser angeschlossen werden, z. B. um die Zuverlässigkeit und die Signalausgangsleistung des Demultiplexers zu erhöhen.

Der erste Splitter der ersten Stufe ist vorzugsweise als ein nicht wellenlängenselektiver Splitter ausgebildet. Alternativ wird vorgeschlagen, dass der Splitter der ersten Stufe als ein wellenlängenselektiver Splitter ausgebildet ist, wobei die Wellenlänge des Lichts des Pumplasers außerhalb des Selektionsbereichs des Splitters liegt. Ein typischer Selektionsbereich eines Splitters liegt im Bereich zwischen 1550 nm bis 1580 nm. Die Wellenlänge des Lichts des Pumplasers liegt dann bspw. bei 980 nm oder 1480 nm. Dadurch ist sichergestellt, dass das Licht des Pumplasers gleichmäßig auf alle Ausgänge des Splitters und damit auf alle optischen Verstärker verteilt wird.

Gemäß einer bevorzugten Ausführungsform der vorliegenden Erfindung wird vorgeschlagen, dass der Multiplexer in einer ersten Stufe mehrere erste Combiner mit jeweils mehreren Eingängen und mindestens einem Ausgang und in allen nachfolgenden Stufen mindestens einen weiteren Combiner mit jeweils einem Eingang für jeden Ausgang der ersten Combiner der übergeordneten Stufe und mindestens einem Ausgang aufweist, wobei der oder jeder Pumplaser jeweils an einen freien Ausgang eines weiteren Combiners angeschlossen ist. An die übrigen freien Ausgänge können weitere Pumplaser angeschlossen werden, z. B. um die Zuverlässigkeit und die Signalausgangsleistung des Multiplexers zu erhöhen.

Vorteilhafterweise weist der Multiplexer in einer ersten Stufe mehrere erste Combiner mit jeweils mehreren Eingängen und mindestens einem Ausgang und in allen nachfolgenden Stufen mindestens einen weiteren Combiner mit jeweils einem Eingang für jeden Ausgang der ersten Combiner der übergeordneten Stufe und mindestens einem Ausgang auf, wobei der oder jeder Pumplaser jeweils an einen freien Ausgang des weiteren Combiners der letzten Stufe angeschlossen ist.

Über den freien Ausgang des weiteren Combiners der letzten Stufe wird die optische Energie des Pumplasers auf dem weiteren Combiner vorangestellten optischen Verstärker verteilt.

Der weitere Combiner der letzten Stufe ist vorzugsweise als ein nicht wellenlängenselektiver Combiner ausgebildet. Alternativ wird vorgeschlagen, dass der weitere Combiner der letzten Stufe als ein wellenlängenselektiver Combiner ausgebildet ist, wobei die Wellenlänge des Lichts des Pumplasers außerhalb des Selektionsbereiches des weiteren Combiners liegt.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: einen erfindungsgemäßen optischen Demultiplexer gemäß einer bevorzugten Ausführungsform;
- Figur 2: einen erfindungsgemäßen optischen Multiplexer gemäß einer bevorzugten Ausführungsform; und
- Figur 3: einen aus dem Stand der Technik bekannten optischen Verstärker.

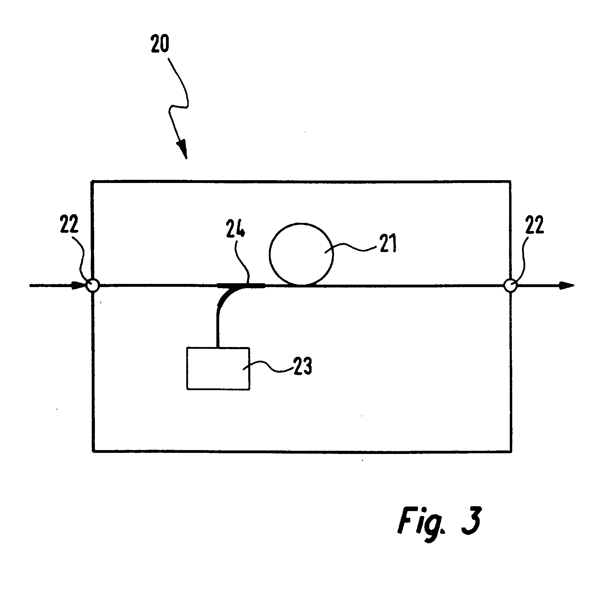

In Figur 3 ist ein optischer Verstärker, wie er bspw. aus der EP 0 867 985 A1 an sich bekannt ist, in seiner Gesamtheit mit dem Bezugszeichen 20 bezeichnet. Der optische Verstärker 20 weist eine Erbium-dotierte Glasfaser oder einen Erbium-dotierten planaren Wellenleiter 21 auf, wie sie an sich aus der US 5,491,708 bekannt sind. Auf diese beiden Druckschriften wird ausdrücklich Bezug genommen.

Am Eingang und am Ausgang des optischen Verstärkers 20 ist jeweils ein Isolator 22 angeordnet, der - ähnlich wie Dioden bei elektrischen Signalen - die optischen Signale nur in eine Richtung hindurch treten lässt. Ohne Isolatoren 22 würden Reflexionen beim Einkoppeln bzw. Auskoppeln des zu verstärkenden optischen Signals zu einem Aufschaukeln des Signals innerhalb des optischen Verstärkers 20 führen.

Der optische Verstärker 20 weist außerdem einen Pumplaser 23 auf, dessen Licht über einen optischen Einkoppler 24 in die Erbium-dotierte Faser 21 wellenlängenselektiv eingekoppelt wird. Die Wellenlänge des Lichts des Pumplasers 23 ist kleiner als die Wellenlänge des zu verstärkenden Signals. Das zu verstärkende Signal hat bspw. eine Wellenlänge von 1550 nm, während das Licht des Pumplasers 23 bspw. eine Wellenlänge von 980 nm oder 1480 nm hat. Mit dem in Figur 3 dargestellten optischen Verstärker kann ein optisches Signal um 20 bis 30 dB, also etwa um den Faktor 1000 verstärkt werden. Die Funktionsweise eines solchen optischen Verstärkers ist ausführlich in der EP 0 867 985 A1 beschrieben.

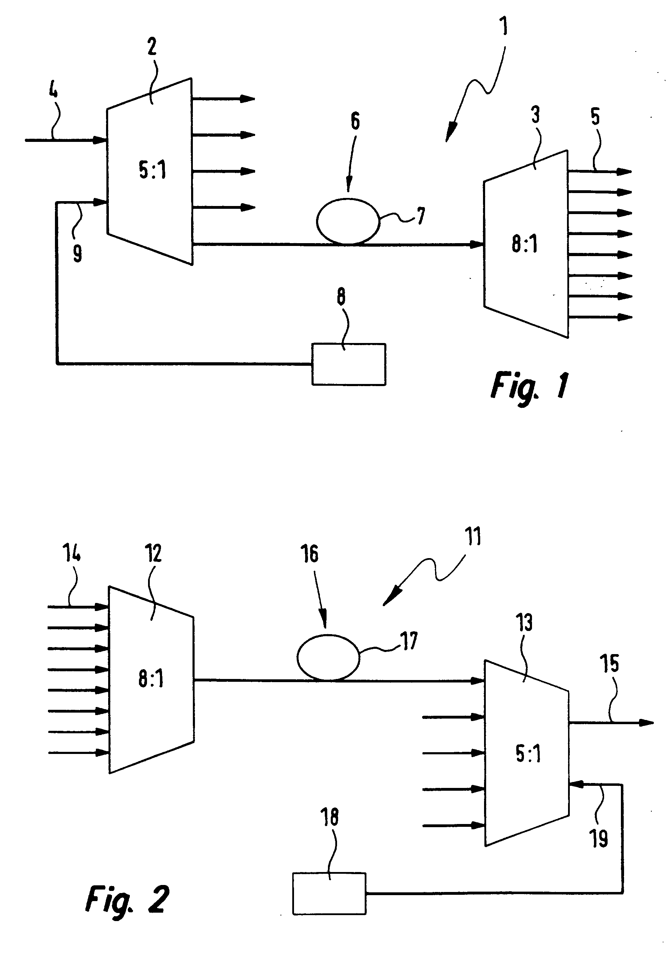

In Figur 1 ist ein optischer Demultiplexer gemäß der vorliegenden Erfindung in seiner Gesamtheit mit dem Bezugszeichen 1 bezeichnet. Der Demultiplexer 1 ist zweistufig aufgebaut, wobei eine erste Stufe einen ersten Splitter 2 und eine zweite Stufe fünf weitere Splitter 3 aufweist, von denen in Figur 1 nur einer dargestellt ist. Mit Hilfe des Demultiplexers 1 kann eine optische Eingangsinformation, die an einem Eingang 4 des ersten Splitters 2 anliegt, auf mehrere Ausgänge 5 der weiteren Splitter 3 verteilt werden. Mit dem in Figur 1 dargestellten Demultiplexer 1 kann die Eingangsinformation auf 40 Ausgänge 5 verteilt werden. Der erste Splitter 2 ist als ein nicht wellenlängenselektiver 5:1-Splitter ausgebildet. Die weiteren Splitter 3 sind als wellenselektive 8:1-Splitter ausgebildet.

Zwischen dem ersten Splitter 2 der ersten Stufe und den weiteren Splittern 3 der zweiten Stufe sind optische Verstärker 6 angeordnet, von denen in Figur 1 nur einer beispielhaft dargestellt ist. Die optischen Verstärker 6 umfassen eine mit einem Metall der Seltenen Erden dotierte Glasfaser 7 und eine Energiequelle 8. Die Glasfaser 7 ist mit Erbium dotiert. Alternativ kann sie auch mit Ytterbium (Yb) oder Praesodym (Pr) dotiert sein. Statt einer Glasfaser 7 kann auch ein mit einem Metall der Seltenen Erden dotierter planarer Wellenleiter eingesetzt werden. Die Energiequelle 8 ist als ein Pumplaser ausgebildet.

Damit nicht jeder dotierten Glasfaser 7 eine eigene Energiequelle 8 zugeordnet ist, wird erfindungsgemäß vorgeschlagen, die Energiequelle 8 an einen freien Eingang 9 des ersten Splitters 2 der ersten Stufe anzuschließen. Über den ersten Splitter 2 wird die optische Energie des Pumplasers auf sämtliche an den Ausgängen des ersten Splitters 2 angeschlossene optischen Verstärker 6 verteilt.

Auf diese Weise erhält zwar jeder optische Verstärker 6 nur ein Fünftel der Gesamtenergie des Pumplasers. Diese Energie reicht aber problemlos aus, um die innerhalb des Demultiplexers 1 auftretenden Verluste zu kompensieren. Die Dämpfung des Demultiplexers 1 liegt etwa im Bereich von 17 dB, wohingegen mit dem in Figur 1 dargestellten erfindungsgemäßen Demultiplexer 1 eine Verstärkung der optischen Signale mit den einzelnen optischen Verstärkern 6 um jeweils etwa 23 dB möglich ist.

Bei dem erfindungsgemäßen Demultiplexer 1 ist gegenüber den aus dem Stand der Technik bekannten optischen Verstärkern 20 lediglich ein Pumplaser für sämtliche Erbium-dotierte Glasfasern vorgesehen. Darüber hinaus kann auf den optischen Einkoppler 24 und die Isolatoren 22 verzichtet werden. Dadurch kann der erfindungsgemäße Demultiplexer 1 besonders kleinbauend und kostengünstig ausgebildet werden.

In Figur 2 ist ein erfindungsgemäßer optischer Multiplexer in seiner Gesamtheit mit dem Bezugszeichen 11 bezeichnet. Der Multiplexer 11 ist mehrstufig ausgebildet, wobei er in einer ersten Stufe fünf erste Combiner 12 und in einer nachfolgenden zweiten Stufe einen weiteren Combiner 13 aufweist. Der Multiplexer 11 dient zum Verknüpfen von an den Eingängen 14 des ersten Combiners 12 anliegenden optischen Eingangsinformationen zu einer an einem Ausgang 15 des weiteren Combiners 13 anliegenden gemeinsamen Ausgangsinformation.

Zwischen den ersten Combinern 12 der ersten Stufe und dem weiteren Combiner 13 der zweiten Stufe des Multiplexers 11 sind jeweils optische Verstärker 16 angeordnet. Die optischen Verstärker 16 umfassen jeweils eine mit einem Metall der Seltenen Erden dotierte Glasfaser 17. Die Glasfaser 17 ist mit Erbium dotiert; ebenso kann sie aber auch mit Ytterbium (Yb) oder Praesodym (Pr) dotiert sein. Statt der dotierten Glasfaser 17 kann auch ein dotierter planarer Wellenleiter eingesetzt werden. Allen dotierten Glasfasern 17 ist eine gemeinsame Energiequelle 18 zugeordnet, die als ein Pumplaser ausgebildet ist. Die Energiequelle 18 ist an einen freien Ausgang 19 des weiteren Combiners 13 der zweiten Stufe angeschlossen. Die optische Energie des Pumplasers wird über den weiteren Combiner 13 gleichmäßig auf sämtliche vorgeschaltete optische Verstärker 16 verteilt.

Der erste Splitter 2 der ersten Stufe des Demultiplexers 1 ist als ein nicht wellenlängenselektiver Splitter ausgebildet. Es wäre aber auch denkbar, den ersten Splitter 2 als einen wellenlängenselektiven Splitter auszubilden, solange die Wellenlänge des Lichts der Energiequelle 8 außerhalb des Selektionsbereiches des Splitters 2 liegt. Ebenso ist der weitere Combiner 13 der zweiten Stufe des Multiplexers 11 als ein nicht wellenlängenselektiver Combiner ausgebildet. Er könnte ebenfalls als ein wellenlängenselektiver Combiner ausgebildet sein, sofern die Wellenlänge des Lichts der Energiequelle 18 außerhalb des Selektionsbereichs des weiteren Combiners 13 liegt.

## Patentansprüche

1. Optischer Demultiplexer (1) mit mindestens einem Eingang (4) und mehreren Ausgängen (5), zum Verteilen einer optischen Eingangsinformation auf mehrere Ausgangsinformationen (5), wobei der Demultiplexer (1) mehrstufig ausgebildet ist und die einzelnen Stufen mittels optischer Wellenleiter miteinander verbunden sind, **dadurch gekennzeichnet, dass** zwischen den einzelnen Stufen des Demultiplexers (1) optische Verstärker (6) angeordnet sind, die mit einem Metall der Seltenen Erden dotierte aktive Glasfasern (7) oder aktive planare Wellenleiter und mindestens eine Energiequelle (8) aufweisen, wobei eine Energiequelle (8) für mehrere optische Verstärker (6) vorgesehen ist.

2. Optischer Multiplexer (11) mit mehreren Eingängen (14) und mindestens einem Ausgang (15), zum Verknüpfen von optischen Eingangsinformationen zu einer Ausgangsinformation, wobei der Multiplexer (11) mehrstufig ausgebildet ist und die einzelnen Stufen mittels optischer Wellenleiter miteinander verbunden sind, **dadurch gekennzeichnet, dass** zwischen den einzelnen Stufen des Multiplexers (11) optische Verstärker (16) angeordnet sind, die mit einem Metall der Seltenen Erden dotierte aktive Glasfasern (17) oder aktive planare Wellenleiter und mindestens eine Energiequelle (18) aufweisen, wobei eine Energiequelle (18) für mehrere optische Verstärker (16) vorgesehen ist.

3. Demultiplexer (1) nach Anspruch 1 oder Multiplexer (11) nach Anspruch 2, **dadurch gekennzeichnet, dass** das Material der Glasfasern (7; 17) oder der Wellenleiter mit Erbium dotiert ist.

4. Demultiplexer (1) oder Multiplexer (11) nach einem der Ansprüche 1 bis 3, **dadurch gekennzeichnet, dass** die oder jede Energiequelle (8; 18) als ein Pumplaser ausgebildet ist.

5. Demultiplexer (1) oder Multiplexer (11) nach einem der Ansprüche 1 bis 4, **dadurch gekennzeichnet, dass** eine Energiequelle (8; 18) für alle optischen Verstärker (6; 16) vorgesehen ist.

6. Demultiplexer (1) nach Anspruch 4, **dadurch gekennzeichnet, dass** der Demultiplexer (1) in einer ersten Stufe einen ersten Splitter (2) mit mindestens einem Eingang (4) und mehreren Ausgängen und in allen nachfolgenden Stufen für jeden Ausgang eines Splitters (2) der übergeordneten Stufe einen weiteren Splitter (3) mit mindestens einem Eingang und mehreren Ausgängen (5) aufweist, wobei der oder jeder Pumplaser (8) jeweils an einem freien Eingang (9) eines Splitters (2, 3) angeschlossen ist.

7. Demultiplexer (1) nach Anspruch 4 und 5, **dadurch gekennzeichnet, dass** der Demultiplexer (1) in einer ersten Stufe einen ersten Splitter (2) mit mindestens einem Eingang (4) und mehreren Ausgängen und in allen nachfolgenden Stufen für jeden Ausgang eines Splitters (2) der übergeordneten Stufe einen weiteren Splitter (3) mit mindestens einem Eingang und mehreren Ausgängen (5) aufweist, wobei der oder jeder Pumplaser (8) jeweils an einem freien Eingang (9) des ersten Splitters (2) der ersten Stufe angeschlossen ist.

8. Demultiplexer (1) nach Anspruch 7, **dadurch gekennzeichnet, dass** der erste Splitter (2) der ersten Stufe als ein nicht wellenlängenselektiver Splitter ausgebildet ist.

9. Demultiplexer (1) nach Anspruch 7, **dadurch gekennzeichnet, dass** der erste Splitter (2) der ersten Stufe als ein wellenlängenselektiver Splitter ausgebildet ist, wobei die Wellenlänge des Lichts des Pumplasers (8) außerhalb des Selektionsbereichs des ersten Splitters (2) liegt.

10. Multiplexer (11) nach Anspruch 4, **dadurch gekennzeichnet, dass** der Multiplexer (11) in einer ersten Stufe mehrere erste Combiner (12) mit jeweils mehreren Eingängen (14) und mindestens einem Ausgang und in allen nachfolgenden Stufen mindestens einen weiteren Combiner (13) mit jeweils einem Eingang für jeden Ausgang der ersten Combiner (12) der übergeordneten Stufe und mindestens einem Ausgang (15) aufweist, wobei der oder jeder Pumplaser (8) jeweils an einen freien Ausgang (19) eines weiteren Combiners (13) angeschlossen ist.

11. Multiplexer (11) nach Anspruch 4 und 5, **dadurch gekennzeichnet, dass** der Multiplexer (11) in einer ersten Stufe mehrere erste Combiner (12) mit jeweils mehreren Eingängen (14) und mindestens einem Ausgang und in allen nachfolgenden Stufen mindestens einen weiteren Combiner (13) mit jeweils einem Eingang für jeden Ausgang der ersten Combiner (12) der übergeordneten Stufe und mindestens einem Ausgang (15) aufweist, wobei der oder jeder Pumplaser (8) jeweils an einen freien Ausgang (19) des weiteren Combiners (13) der letzten Stufe angeschlossen ist.

12. Multiplexer (11) nach Anspruch 11, **dadurch gekennzeichnet, dass** der weitere Combiner (13) der letzten Stufe als ein nicht wellenlängenselektiver Combiner ausgebildet ist.

13. Multiplexer (11) nach Anspruch 11, **dadurch gekennzeichnet, dass** der weitere Combiner (13) der letzten Stufe als ein wellenlängenselektiver Combiner ausgebildet ist, wobei die Wellenlänge des Lichts des Pumplasers (8) außerhalb des Selektionsbereichs des weiteren Combiners (13) liegt.
